# EUROPÄISCHE PATENTSCHRIFT

(11) **EP 0 980 635 B1**
(45) Veröffentlichungstag und Bekanntmachung des Hinweises auf die Patenterteilung: **02.01.2003**
(21) Anmeldenummer: 98932054.4
(22) Anmeldetag: 05.05.1998
(51) Int. Cl.: H04Q 7/38

(54) **VERFAHREN UND VORRICHTUNG ZUM AUTHENTISIEREN VON MOBILFUNKTEILNEHMERN**
METHOD AND DEVICE TO AUTHENTICATE SUBSCRIBERS IN A MOBILE RADIOTELEPHONE SYSTEMS
PROCEDE ET DISPOSITIF POUR AUTHENTIFIER DES UTILISATEURS D'UN SYSTEME RADIOTELEPHONIQUE MOBILE

(30) Priorität: 05.05.1997 DE 19718827
(43) Veröffentlichungstag der Anmeldung: 23.02.2000
(73) Patentinhaber: T-Mobile Deutschland GmbH, 53227 Bonn (DE)
(72) Erfinder: MOHRS, Walter, D-53123 Bonn (DE)
(74) Vertreter: Riebling, Peter, Dr.-Ing.
(86) Internationale Anmeldenummer: DE9801232
(87) Internationale Veröffentlichungsnummer: WO98051112

(56) Entgegenhaltungen:
- WO-A-95/02927
- WO-A-95/24106
- WO-A-98/28929
- GRIGOROVA TH ET AL: "SIM CARDS" TELECOMMUNICATION JOURNAL OF AUSTRALIA, Bd. 43, Nr. 2, 1993, Seiten 33-38, XP000561670

## Beschreibung

Die Erfindung betrifft ein Verfahren und eine Vorrichtung zum Authentisieren von Mobilfunkteilnehmern eines digitalen Mobilkommunikationssystems gegenüber einer Authentisierungsinstanz eines Schnurlostelefonsystems.

Hintergrund der Erfindung ist die zur Zeit untersuchte und in der Entwicklung vorangetriebene Möglichkeit, ein Mobilfunknetz mit einem Schnurlostelefonsystem (HBS: Home Base System) zu koppeln. Zukünftige Mobilfunkendgeräte können dann nicht nur allein im Mobilfunknetz betrieben werden, sondern auch im Heimbereich mit einem Schnurlostelefonsystem als quasi "Super-Schnurlos Telefon". Wichtige Randbedingung dabei ist, daß die im Mobilfunknetz verwendeten Algorithmen zur Authentikation und Sprach-/Datenverschlüsselung auch im Heimbereich - bei dem Schnurlostelefonsystem - angewandt werden können.

In GSM-Mobilkommunikationssystemen werden zur Systemsicherung mehrere Kryptoalgorithmen (A3, A5 und A8) verwendet, durch welche die Authentisierung der Teilnehmer gegenüber dem Netz und die Verschlüsselung der Datenübertragung sichergestellt wird. Dazu wird bei jedem Verbindungsaufbau zwischen dem Netz und einem Teilnehmer ausgehend vom Authentikationszentrum eine Zufallszahl (RAND) über die Funkschnittstelle an die persönliche Komponente (SIM-Karte) des Teilnehmers übertragen, die sowohl in der SIM als auch im Authentikationszentrum unter Anwendung der Kryptoalgorithmen mit einem dort identisch vorhandenen Ki-Schlüssel zu einem Wert SRES verschlüsselt wird. Der in der SIM ermittelte SRES Wert wird an das Authentikationszentrum übertragen und mit dem dort ermittelten SRES Wert verglichen. Nur bei Übereinstimmung der unabhängig voneinander ermittelten Werte erfolgt eine positive Authentikation des Teilnehmers.

Der Aufbau und die Funktionsweise von SIM-Karten, wie sie in GSM-Mobilkommunikationssystemen verwendet werden, ist allgemein in einem Artikel von Grigorova, Theodora et al.: "SIM Cards", Telecommunication Journal of Australia, Bd. 43, Nr. 2, 1993, Seiten 33-38 beschrieben.

Will man nun diese Authentikationprozedur auf ein Schurlostelefonsystem anwenden, so würde das bedeuten, daß in der Feststation des Schnurlostelefonsystems die notwendigen Kryptoalgorithmen implementiert als auch der geheime Ki-Schlüssel abgelegt werden müsste. Dies wäre allein aus sicherheitstechnischen Aspekten für den Mobilfunknetzbetreiber nicht tragbar und zudem mit einem sehr großen technischen und administrativen Aufwand verbunden.

In diesem Zusammenhang offenbart die WO-A-95/24106 ein sicheres, persönliches Funkkommunikationssystem, wobei ein Verfahren zur Authentisierung eines Mobilfunkteilnehmers gegenüber einer Basisstation eines Schnurlostelefonsystems beschrieben ist. Die Basisstation des Schnurlostelefonsystems ist über das Festnetz mit den Einrichtungen des Mobilkommunikationssystems verbunden und übermittelt unter anderem Authentisierungs- und Verifikationssignale zwischen einem Mobilfunkendgerät und entsprechenden Einrichtungen des Mobilkommunikationssystems. Die Basisstation des Schnurlostelefonsystems arbeitet bei der mobilfunkinternen Authentisierung im wesentlichen nur als passive Relaisstation und ist nicht in der Lage, die Authentisierungsprozedur unabhängig und ohne Festnetz-Verbindung zum Mobilkommunikationssystem durchzuführen.

Der vorliegenden Erfindung liegt die Aufgabe zugrunde, ein Verfahren und eine Vorrichtung zum Authentisieren von Mobilfunkteilnehmern gegenüber einer Authentisierungsinstanz eines Schnurlostelefonsystems sowie zur korrekten Ermittlung des für eine kodierte Sprach- und/oder Datenübertragung notwendigen Verschlüsselungsschlüssels anzugeben, welches einfach und kostengünstig zu realisieren ist und gute Sicherheit bietet.

Zur Lösung der gestellten Aufgabe ist ein Verfahren mit den Merkmalen des Patentanspruchs 1 und eine Vorrichtung mit den Merkmalen des Patentanspruchs 9 vorgesehen.

Wesentlicher Vorteil der Erfindung ist, daß die Vorrichtung zur Ermittlung der Authentikations- und Kodierungsparameter weder
- eine Verbindung zum Authentikationszentrum des Mobilfunknetzes (z.B. zur MSC) benötigt, noch
- eine spezielle Chipkarte enthalten muß, die unter anderem den im Mobilfunknetz verwendeten Authentikationsalgorithmus (bei GSM: A3/A8) sowie geheime Daten (Ki) des zu authentisierenden Mobilfunkteilnehmers besitzt.

Mit dieser Erfindung kann sowohl auf die Bereitstellung des Authentikationsalgorithmus seitens der Authentisierungsinstanz eines Schnurlostelefonsystems als auch auf abgestimmte Schlüssel (Ki) im Schnurlostelefonsystem und in der SIM verzichtet werden.

Weiterer Vorteil ist, daß das Schnurlostelefonsystem, insbesondere die Feststation (HBS), nur geringen Modifikationen unterworfen werden muß, um die geforderten Funktionen einer Authentisierungsinstanz ausführen zu können.

Dies wird erreicht, indem dem Schnurlostelefonsystem die Fähigkeit hat, sowohl den Authentikationsalgorithmus der verwendeten Chipkarte (SIM: Subscriber Identity Module) ausführen zu können als auch zumindest einen, mit der SIM abgestimmten, geheimen Schlüssel besitzt. Erfüllt das Schnurlostelefonsystem diese beiden Randbedingungen ist es in der Lage, mit einer sich anmeldenden SIM eine Authentikationsprozedur nach dem Challenge/Response Verfahren durchzuführen, die identisch zur jener ist, die in digitalen Mobilfunknetzen, insbesondere GSM, angewandt wird.

Es wird von einem bekannten Schnurlostelefonsystem ausgegangen, welches bevorzugt nach dem digitalen DECT Standard arbeitet.

In einer ersten Ausführungsform ist die Feststation des Schnurlostelefonsystems mit einem Kartenlesegerät ausgestattet, mit welchem herkömmliche Chipkarten (SIM-Karten) gelesen bzw. beschrieben werden können.
Weiterhin besitzt die Feststation einen Zufallsgenerator, welcher die im GSM System verwendeten 128-Bit Zufallszahlen erzeugen kann.

Ferner ist in der Feststation ein nichtflüchtiger Speicher vorgesehen, welcher bevorzugt eine Speicherkapazität von einigen Kilobyte aufweist.

Zur Authentikation schickt die Feststation des Schnurlostelefonsystems der SIM-Karte des Teilnehmers einen Zufallswert (RAND), der in bekannter Weise von der SIM-Karte mit einen Responsewert (SRES) beantwortet wird. Gleichzeitig ist durch diesen Vorgang ein Schlüssel (Kc) für eine anschließende Sprachverschlüsselung verhandelt worden, der ebenfalls anhand der Zufallszahl ermittelt wird. Idealerweise nutzt man im Schnurlostelefonsystem als Träger des Algorithmus und des Schlüssels die SIM-Karte des jeweiligen Mobilfunkteilnehmers, der das Schnurlostelefonsystem benutzen möchte.

In einem Initialisierungsvorgang der die SIM-Karte eines Teilnehmers und das Schnurlostelefonsystem miteinander bekannt macht und der auf jeden Fall stattfinden muß, führt der Teilnehmer seine SIM-Karte in das Lesegerät der Feststation des Schnurlostelefonsystems ein. Die SIM-Karte teilt der Feststation des Schnurlostelefonsystems nicht nur ihre Kennung (Kartennummer oder IMSI) mit, was zur Bekanntmachung eigentlich genügen würde, sondern die Feststation führt anschließend zusätzlich eine gewisse, genügend große Anzahl an internen Authentisierungsprozeduren durch. Dabei wird in der Feststation eine Zufallszahl (RAND) erzeugt und an die SIM-Karte übertragen. Auf der SIM-Karte wird nun die darauf implementierte GSM-Prozedur "RUN GSM ALGORITHM" ausgeführt, d.h. die SIM-Karte ermittelt in bekannter Weise aus der Zufallszahl einen verschlüsselten Wert SRES sowie einen Chiffrierungsschlüssel Kc, und übergibt diese Werte an die Feststation. Darauf speichert die Feststation die erhaltenen Ergebnisse zusammen mit der zugehörigen Zufallszahl in einem nichtflüchtigen Speicher ab. Der Vorgang der internen Authentifikation wird wie oben erwähnt mehrmals wiederholt. Die erhaltenen Werte bilden praktisch einen Vorrat, mit dem anschließend über die Funkschnittstelle "reguläre" Authentikationen mit der SIM-Karte durchgeführt werden können.

Eine interne Authentikation ist also der gleiche Vorgang, den jedes Mobilfunkendgerät mit seiner SIM durchführt, wenn über die Funkschnittstelle des GSM-Netzes ein "Authentication Request" übermittelt wird, im einzelnen:
- Übergabe einer Zufallszahl (RAND) an die SIM
- Ausführung des GSM-Kommandos "RUN GSM ALGORTHM"
- Abholen der Antwortdaten der SIM, welche Daten dem SRES und dem Kc entsprechen

Mit jeder Ausführung dieser drei Schritte erzeugt sich die Feststation ein sogenanntes Authentikationstriplet (RAND, SRES, Kc), welches später eine Authentikation mit der SIM-Karte ermöglicht.

Anhand der in der Feststation des Schurlostelefonsystems gespeicherten Triplets kann nun eine reguläre Authentikation zwischen Feststation und eine Mobilstation durchgeführt werden, welche, angelehnt an die GMS-Authentifikationsprozedur, folgendermaßen abläuft.

Bei jedem Verbindungsaufbau schickt die Feststation über die Funkschnittstelle der SIM-Karte einen Zufallswert (RAND) aus der Menge der zuvor gespeicherten Triplets. Mit diesem Zufallswert errechnet die SIM-Karte einen entsprechenden Antwortwert SRES und einen Schlüssel Kc. Der SRES Wert wird an die Feststation zurückgegeben und mit dem abgespeicherten SRES Wert des zur Zufallszahl gehörigen Triplets verglichen. Stimmen die SRES Werte überein, so ist die Authentikation erfolgreich und es ist sichergestellt, daß der in der SIM-Karte errechnete Chiffrierungsschlüssel Kc mit dem zugehörigen, in der Feststation abgespeicherten Schlüssel Kc übereinstimmt.

In einer weiteren Ausführungsform ist vorgesehen, die Feststation des Schnurlostelefonsystems nicht mit einem Kartenlesegerät auszustatten, sondern die interne Initialisierung über eine drahtgebundene Schnittstelle (z.B. X.25, RS232, o.ä.) oder die vorhandene Funkschnittstelle durchzuführen. Insbesondere bei Übertragung der Initialisierungsdaten über die Funkschnittstelle ist auf Abhörsicherheit zu achten, d.h. die übertragenen Inititalisierungsdaten sollten verschlüsselt übertragen werden.
Dies könnte in einfacher Weise dadurch geschehen, daß die Initialisierung, d.h. die Erzeugung weiterer Triplets, während eine regulären Verbindung zwischen Mobilfunkendgerät und Feststation erfolgt, da hierbei die Daten bereits verschlüsselt übertragen werden. Die Initialisierung muss lediglich durch eine entsprechend am Mobilfunkendgerät vorgesehene Taste oder einen entsprechenden Befehl gestartet werden.

Ein wichtiger Punkt ist, daß die Erzeugung der Triplets in einer sicheren, nicht von außen abhörbaren Umgebung abläuft (nämlich direkt über eine kontaktbehaftete SIM/Endgeräte Schnittstelle oder eine verschlüsselte Funkschnittstelle). Weiterhin ist wichtig, daß die Aufbewahrung der Triplets in der Feststation des Schnurlostelefonsystems in einer geschützten, nicht auslesbaren Systemumgebung stattfindet. Nicht zu vergessen ist der Punkt, daß die Güte der Zufahlszahlenerzeugung in der Feststation ein nicht zu vernachlässigendes Sicherheitsrisiko darstellt.

Es ist abhängig von der Zeit, die für die Initialisierung gewährt wird, sowie von der in der Feststation vorgesehenen Speicherkapazität, wie viele Triplets vorab erzeugt werden. Als typischen Wert für die Erzeugung von Triplets durch eine SIM-Karte kann eine Anzahl von 2-3 Triplets/Sekunde angenommen werden. Der Speicherbedarf für ein Triplet beträgt 28 Byte (RAND = 128 Bit, SRES = 32 Bit, Kc = 64 Bit).

Beispielhaft sei angeführt, daß mit einer Initialisierungszeit von 1 Minute Triplets für die nächsten 120-180 Authentikationen erzeugt werden können, die eine Speichervolumen von 3-5 kByte erfordern.

Wenn der Vorrat an Triplets verbraucht ist, kann entschieden werden, ob eine neu Initialisierung sofort erforderlich ist, oder ob die HBS nochmals auf bereits verwendete Triplets zugreifen darf. Im letzten Fall sollte die HBS den Benutzer darauf aufmerksam machen, daß Triplets bereits wiederverwendet werden und eine erneute Initialisierung erforderlich ist.

Der Vorrat an Triplets in der HBS soll kartengebunden, daß heißt an die Kartennummer oder IMSI der SIM geknüpft sein. Damit erreicht man, daß auch mehrere SIMs gleichzeitig am der gleichen HBS arbeiten können. Jede der verwendeten SIM muß lediglich der gleichen, oben beschriebenen Initialisierungsprozedur unterworfen werden. Die entsprechenden Triplets werden anhand der auf den SIM-Karten abgelegten individuellen IMSI in einer der IMSI zugeordneten Datenbank abgespeichert und entsprechend ausgewählt.

Durch genügend große Speicherkapazität in der HBS lässt sich ein Tripletvorrat erzeugen, der groß genug ist, daß
- eine Wiederverwendung der Triplets erst Langfristig notwendig wird
- selbst eine Wiederverwendung von Triplets, in zufälliger Reihenfolge, einen unvorhersehbaren Charakter, d.h. ein genügend großes Sicherheitsniveau, hat.

Die HBS kann zur Abwehr von Betrug und Mißbrauch einen Mechanismus haben, der bei wiederholt fehlerhaft ausgeführter Authentikation die gespeicherten Triplets verwirft und dem angemeldeten Teilnehmer das Recht zur Nutzung der HBS entzieht.

Weitere Einzelheiten und Merkmale der Erfindung ergeben sich aus der nachfolgenden Beschreibung eines Ausführungsbeispiels anhand der Zeichnungen. Es zeigt:
- Figur 1:: Initialisierung der Feststation eines Schnurlostelefonsystems für eine SIM-Karte;
- Figur 2:: Authentikation mit einer initialisierten SIM-Karte.

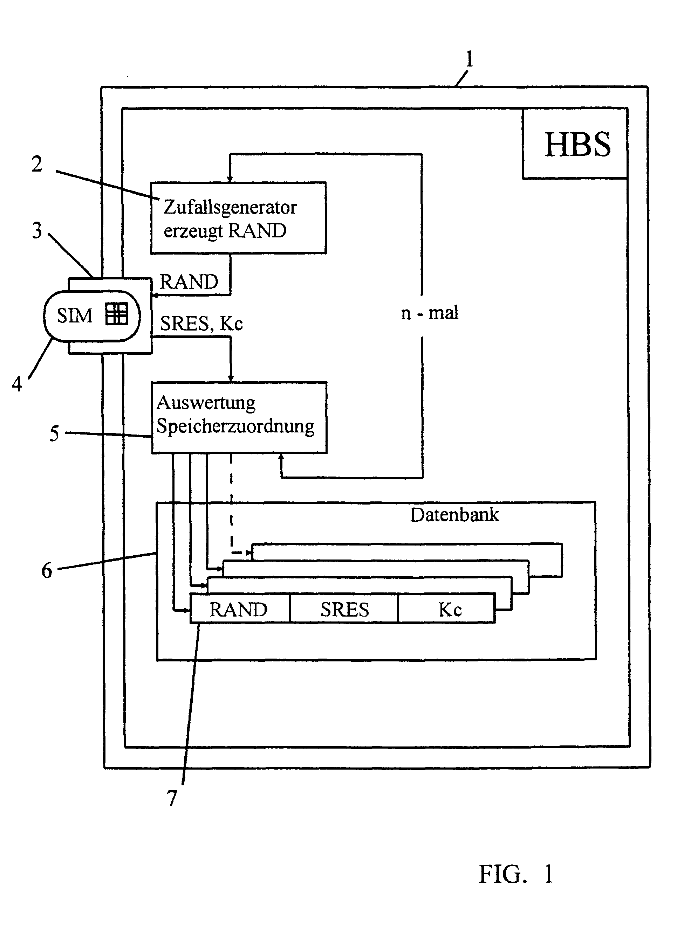

In Figur 1 ist schematisch die Erzeugung und Speicherung der Authentikationstriplets in der Feststation 1 des Schnurlostelefonsystems dargestellt.

Die Feststation 1 verfügt über eine Vorrichtung 3 zum Lesen und Schreiben von Chipkarten 4, in welche zur Initialisierung eines Teilnehmerverhältnisses die SIM-Karte 4 des Teilnehmers eingeführt wird. Mittels eines Zufallsgenerators wird nun in bekannter Weise eine 128-Bit Zufallszahl (RAND) erzeugt, die an die SIM-Karte übermittelt wird.
Dort wird der darin abgelegte Authentikationsalgorithmus gestartet, d.h. die SIM-Karte ermittelt aus der Zufallszahl (RAND) eine codierte Zahl SRES und einen Chiffrierungsschlüssel Kc, welche beide an eine Auswerteeinrichtung 5 der Festscation 1 übergeben werden. Die übermittelten Werte werden zusammen mit der Zufallszahl in einer Datenbank 6 nichtflüchtig gespeichert. Diese interne Initialisierungsprozedur wird mehrmals wiederholt und die entsprechenden Datensätze 7 in Form von Authentikationstriplets (RAND, SRES, Kc) in der Datenbank 6 abgelegt.
In der Datenbank sind nun Initialisierungstriplets abgelegt, die in folgenden zur regulären Authentifikation zwischen Mobilfunkendgerät und Feststation verwendet werden können.

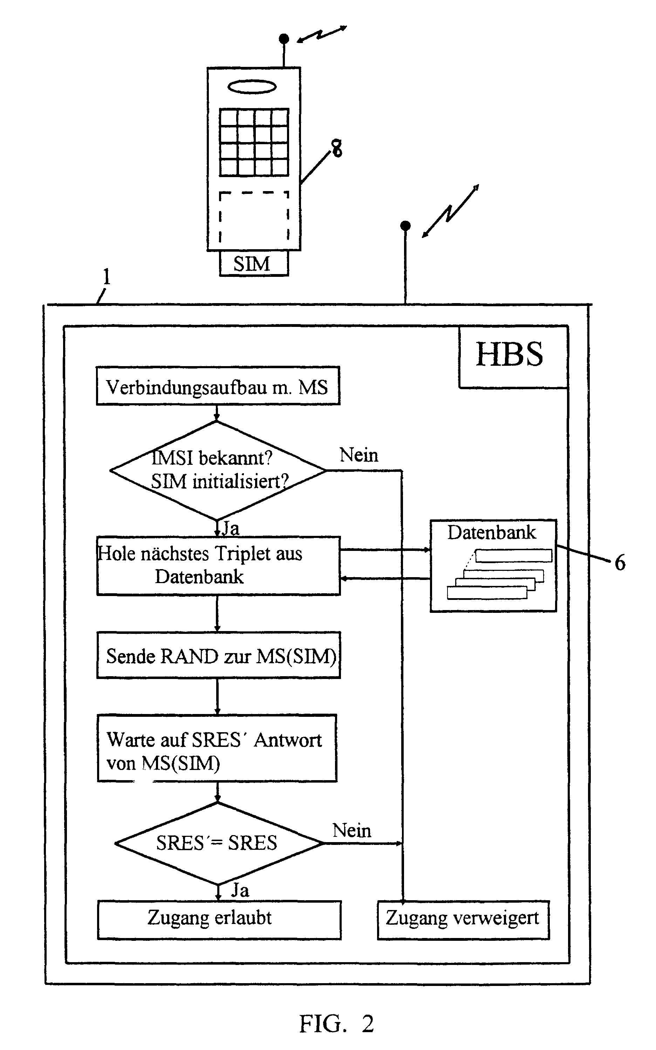

In Figur 2 ist dargestellt, welche Funktionen bei der realen Authentifikation in der Feststation ablaufen.

Ein Mobilfunkendgerät 8 will sich bei der Feststation 1 einbuchen. Dabei wird das Mobilfunkgerät mit einer zuvor bei der Feststation 1 initialisierten SIM-Karte personalisiert. Zunächst wird über die Funkschnittstelle ein Verbindungsaufbau zwischen Mobilfunkendgerät 8 und Feststation 1 hergestellt.
Die auf der SIM-Karte enthaltene IMSI wird an die Feststation 1 übermittelt, welche prüft, ob ihr die IMSI bekannt ist bzw. ob die SIM-Karte bereits initialisiert wurde. Ist das nicht der Fall, wird der Zugang zur Feststation verweigert und die Verbindung abgebrochen.

Ist die SIM-Karte bekannt, greift die Feststation 1 auf die Datenbank 6 zu, holt sich das nächstfolgende Authentikationstriplet 7 und sendet die im Triplet enthaltene Zufallszahl (RAND) an die SIM-Karte. Die SIM-Karte ermittelt aus der Zufallszahl eine SRES' Antwort und sendet diese zurück an die Feststation 1. Diese vergleicht den SRES' Wert mit dem SRES Wert, der im aktuell ausgewählten Triplet der Feststation enthalten ist. Nur wenn die beiden Werte SRES' und SRES übereinstimmen, erhält das Mobilfunkendgerät mit genau dieser SIM-Karte Zugang zur Feststation und kann über diese kommunizieren.

Stimmen die SRES Werte nicht überein, so verweigert die Feststation den Zugang.

### Zeichnungslegende

- 1: Feststation (HBS)
- 2: Zufallsgenerator
- 3: Kartenlese-/schreibvorrichtung
- 4: SIM-Karte
- 5: Auswerteeinrichtung
- 6: Datenbank
- 7: Datensatz, (Authentikations-) Triplet
- 8: Mobilfunkendgerät (MS)

## Patentansprüche

1. Verfahren zur Authentisierung eines Teilnehmers eines digitalen Mobilkommunikationssystems gegenüber einer Authentisierungsinstanz (1) eines digitalen Schnurlostelefonsystems, **gekennzeichnet durch** folgende Schritte:
- Einmalige Initialisierung des Teilnehmers bei der Authentisierungsinstanz (1) des Schnurlostelefonsystems **durch**:
a) Erzeugen einer Zufallszahl **durch** die Authentisierungsinstanz (1) des Schnurlostelefonsystems;
b) Übermitteln der Zufallszahl an eine teilnehmerspezifische Komponente (4) des Mobilkommunikationsendgerätes (8) des Teilnehmers;
c) Zurückgeben der aus der Zufallszahl ermittelten Antwortdaten von der teilnehmerspezifischen Komponente (4) an die Authenisierungsinstanz (1);
d) Abspeichern der Zufallszahl mit den zugeordneten Antwortdaten in Form eines Authentikationstriplets (7) in einem nichtflüchtigen Speicher der Authentisierungsinstanz (1) des Schnurlostelefonsystems;
e) Mehrmaliges Wiederholen der Schritte a) - d) ;
- Reguläre Authentikation des Mobilfunkteilnehmers gegenüber der Authentisierungsinstanz (1) des Schnurlostelefonsystems über eine gemeinsame Funkschnittstelle anhand der bei der Initialisierung in der Authentisierungsinstanz abgespeicherten Authentikationstriplets (7).

2. Verfahren nach Anspruch 1, **dadurch gekennzeichnet, daß** die reguläre Authentisierung folgende Schritte umfasst:
Auslesen eines Authentikationstriplets (7) aus dem Speicher der Authentisierungsinstanz (1);
Übertragen der Zufallszahl des ausgelesenen Authentikationstriplets (7) an die teilnehmerspezifische Komponente (4) des Mobilfunkendgerätes (8);
Zurückgeben eines aus der Zufallszahl ermittelten Antwortparameters SRES' von der teilnehmerspezifischen Komponente (4) an die Authentisierungsinstanz (1);
Vergleich des Antwortparameters SRES' mit dem entsprechenden im Authentikationstriplet (7) enthaltenen Wert SRES;
Bei Übereinstimmung der Werte SRES' und SRES Zugangserlaubnis für den Mobilfunkteilnehmer zur Kommunikation über ein der Authentisierungsinstanz (1) zugeordnetes, digitales Kommunikationssystem.

3. Verfahren nach Anspruch 2, **dadurch gekennzeichnet, daß** bei einmaliger oder mehrmaliger Nicht-Übereinstimmung der Antwortwerte SRES' und SRES dem Mobilfunkteilnehmer der Zugang verweigert wird.

4. Verfahren nach einem der Ansprüche 1 bis 3, **dadurch gekennzeichnet, daß** die teilnehmerspezifische Komponente (4) zu deren Initialisierung mit einer entsprechenden Lese-/Schreibvorrichtung (3) der Authentisierungsinstanz (1) verbunden ist.

5. Verfahren nach einem der Ansprüche 1 bis 4, **dadurch gekennzeichnet, daß** bei Initialisierung der Austausch von Daten zwischen der teilnehmerspezifischen Komponente (4) und der Authentisierungsinstanz (1) drahtgebunden erfolgt.

6. Verfahren nach einem der Ansprüche 1 bis 3, **dadurch gekennzeichnet, daß** bei Initialisierung der Austausch von Daten zwischen der teilnehmerspezifischen Komponente (4) und der Authentisierungsinstanz (1) drahtlos erfolgt.

7. Verfahren nach einem der Ansprüche 1 bis 6, **dadurch gekennzeichnet, daß** wenn die in der Authentisierungsinstanz (1) gespeicherten Authentikationstriplets (7) verbraucht sind eine neue Initialisierungsprozedur gestartet wird.

8. Verfahren nach einem der Ansprüche 1 bis 7, **dadurch gekennzeichnet, daß** die Authentisierungsinstanz (1) mehrere Teilnehmerdaten und teilnehmerspezifische Authentisierungstriplets (7) verwalten kann.

9. Vorrichtung zur Authentisierung eines Teilnehmers eines digitalen Mobilkommunikationssystems gegenüber einer Authentisierungsinstanz (1) eines digitalen Schnurlostelefonsystems, **gekennzeichnet durch**
die Authentisierungsinstanz (1) als fester Bestandteil eines digitalen Schnurlostelefonsystems;
eine in der Authentisierungsinstanz (1) integrierte oder mit dieser verbundenen Lese/-Schreibvorrichtung (3) zum Lesen/Schreiben der auf einer teilnehmerspezifische Komponente (4) des digitalen Mobilkommunikationssystems enthaltenen Daten;
einen in der Authentisierungsinstanz (1) vorgesehenen Zufallsgenerator (2) zur Erzeugung einer Zufallszahl;
einen in der Authentisierungsinstanz (1) vorgesehenen nichtflüchtigen Speicher (6); und
Einrichtungen zur Kommunikation mit Endgeräten (8) des digitalen Mobilkommunikationssystems über eine gemeinsame Funkschnittstelle.

10. Vorrichtung nach Anspruch 9, **dadurch gekennzeichnet, daß** die Authentisierungsinstanz (1) Bestandteil einer Feststation eines digitalen Schnurlostelefonsystems ist.

11. Vorrichtung nach einem der Ansprüche 9 oder 10, **dadurch gekennzeichnet, daß** das digitale Mobilkommunikationssystem ein GSM-Mobilkommunikationsnetz ist.

12. Vorrichtung nach einem der Ansprüche 9 bis 11, **dadurch gekennzeichnet, daß** die teilnehmerspezifische Komponente (4) eine SIM-Karte ist.

## Revendications

1. Procédé pour authentifier un abonné d'un système numérique de communication mobile par rapport à une instance d'authentification (1) d'un système numérique de téléphone sans fil, **caractérisé par** les étapes suivantes :
- initialisation unique de l'abonné auprès de l'instance d'authentification (1) du système de téléphone sans fil grâce
a) à la production d'un nombre aléatoire par l'instance d'authentification (1) du système de téléphone sans fil ;
b) à la transmission du nombre aléatoire à un composant propre à l'abonné (4) du terminal de communication mobile (8) de l'abonné ;
c) au renvoi, dudit composant (4) vers l'instance d'authentification (1), des données de réponse déterminées à partir du nombre aléatoire ;
d) au stockage du nombre aléatoire avec les données de réponse associées, sous la forme d'un triplet d'authentification (7), dans une mémoire non volatile de l'instance d'authentification (1) du système de téléphone sans fil ;
e) à la reprise répétée des phases a)-d) ;
- authentification régulière de l'abonné mobile par rapport à l'instance d'authentification (1) du système de téléphone sans fil par l'intermédiaire d'une interface radio commune à l'aide des triplets d'authentification (7) mis en mémoire lors de l'initialisation dans l'instance d'authentification.

2. Procédé selon la revendication 1, **caractérisé en ce que** l'authentification régulière comprend les phases suivantes :
- lecture d'un triplet d'authentification (7) dans la mémoire de l'instance d'authentification (1) ;
- transmission du nombre aléatoire du triplet d'authentification (7) lu au composant propre à l'abonné (4) du terminal mobile (8) ;
- renvoi, dudit composant (4) vers l'instance d'authentification (1), d'un paramètre de réponse SRES' déterminé à partir du nombre aléatoire ;
- comparaison du paramètre de réponse SRES' avec la valeur SRES correspondante contenue dans le triplet d'authentification (7) ;
- en cas de concordance des valeurs SRES' et SRES, autorisation d'accès pour l'abonné mobile à la communication par l'intermédiaire d'un système de communication numérique associé à l'instance d'authentification (1).

3. Procédé selon la revendication 2, **caractérisé en ce que** si, une ou plusieurs fois, les valeurs de réponse SRES' et SRES ne concordent pas, l'accès est refusé à l'abonné mobile.

4. Procédé selon l'une des revendications 1 à 3, **caractérisé en ce que** le composant propre à l'abonné (4) est relié, en vue de son initialisation, à un dispositif de lecture/écriture (3) correspondant de l'instance d'authentification (1).

5. Procédé selon l'une des revendications 1 à 4, **caractérisé en ce que** lors de l'initialisation, l'échange des données entre le composant propre à l'abonné (4) et l'instance d'authentification (1) se fait par fil.

6. Procédé selon l'une des revendications 1 à 3, **caractérisé en ce que** lors de l'initialisation, l'échange de données entre le composant propre à l'abonné (4) et l'instance d'authentification (1) se fait sans fil.

7. Procédé selon l'une des revendications 1 à 6, **caractérisé en ce que** lorsque les triplets (7) mis en mémoire dans l'instance d'authentification (1) sont utilisés, une nouvelle procédure d'initialisation est déclenchée.

8. Procédé selon l'une des revendications 1 à 7, **caractérisé en ce que** l'instance d'authentification (1) peut gérer plusieurs données d'abonné et plusieurs triplets d'authentification propres à l'abonné (7).

9. Dispositif pour authentifier un abonné d'un système numérique de communication mobile par rapport à une instance d'authentification (1) d'un système numérique de téléphone sans fil, **caractérisé par** :
- l'instance d'authentification (1), comme élément fixe d'un système numérique de téléphone sans fil ;
- un dispositif de lecture/écriture (3) intégré dans l'instance d'authentification (1) ou relié à celui-ci en vue de la lecture/écriture des données contenues sur un composant propre à l'abonné (4) du système numérique de communication mobile ;
- un générateur de nombres aléatoires (2) prévu dans l'instance d'authentification (1) en vue de générer un nombre aléatoire ;
- une mémoire non volatile (6) prévue dans l'instance d'authentification (1) ; et
- des dispositifs pour la communication avec des terminaux (8) du système numérique de communication mobile par l'intermédiaire d'une interface radio commune.

10. Dispositif selon la revendication 9, **caractérisé en ce que** l'instance d'authentification (1) fait partie d'une station fixe d'un système numérique de téléphone sans fil.

11. Dispositif selon la revendication 9 ou 10, **caractérisé en ce que** le système numérique de communication mobile est constitué par un réseau de communication mobile GSM.

12. Dispositif selon l'une des revendications 9 à 11, **caractérisé en ce que** le composant propre à l'abonné (4) est constitué par une carte SIM.

## Claims

1. Method for authenticating a subscriber to a digital mobile communication system in respect of an authenticating entity (1) of a digital cordless telephone system, **characterised by** the following steps:
- single initialisation of the subscriber with the authenticating entity (1) of the cordless telephone system by:
a) generation of a random number by the authenticating entity (1) of the cordless telephone system;
b) communicating the random number to a subscriber-specific component (4) of the mobile communication terminal (8) of the subscriber;
c) returning the response data determined from the random number by the subscriber-specific component (4) to the authenticating entity (1);
d) storing the random number with the assigned response data in the form of an authentication triplet (7) in a non-volatile memory of the authenticating entity (1) of the cordless telephone system;
e) multiple repetition of steps a) to d);
- regular authentication of the mobile radio subscriber in respect of the authenticating entity (1) of the cordless telephone system via a common radio interface using the authentication triplets (7) stored in the authenticating entity on initialisation.

2. Method according to claim 1, **characterised in that** regular authentication comprises the following steps:
reading out an authentication triplet (7) from the memory of the authenticating entity (1);
transferring the random number of the read-out authentication triplet (7) to the subscriber-specific component (4) of the mobile radio terminal (8);
returning a response parameter SRES', determined from the random number, by the subscriber-specific component (4) to the authenticating entity (1);
comparing the response parameter SRES' with the corresponding value SRES contained in the authentication triplet (7);
if the values SRES' and SRES agree, access permission for the mobile radio subscriber for communication via a digital communication system assigned to the authenticating entity (1).

3. Method according to claim 2, **characterised in that** if there is single or multiple non-agreement of the response values SRES' and SRES, the mobile radio subscriber is denied access.

4. Method according to one of claims 1 to 3, **characterised in that** the subscriber-specific component (4) is connected for initialising it to a corresponding read/write device (3) of the authenticating entity (1).

5. Method according to one of claims 1 to 4, **characterised in that** on initialisation the exchange of data between the subscriber-specific component (4) and the authenticating entity (1) takes place wire-bound.

6. Method according to one of claims 1 to 3, **characterised in that** on initialisation the exchange of data between the subscriber-specific component (4) and the authenticating entity (1) takes place without wires.

7. Method according to one of claims 1 to 6, **characterised in that** when the authentication triplets (7) stored in the authenticating entity (1) have been used up a new initialisation procedure is started.

8. Method according to one of claims 1 to 7, **characterised in that** the authenticating entity (1) can manage several subscriber data and subscriber-specific authentication triplets (7).

9. Device for authenticating a subscriber of a digital mobile communication system in respect of an authenticating entity (1) of a digital cordless telephone system, **characterised by**
the authenticating entity (1) as a permanent component of a digital cordless telephone system;
a read/write device (3), integrated into the authenticating entity (1) or connected to it, for reading/writing the data contained on a subscriber-specific component (4) of the digital mobile communication system;
a random generator (2) provided in the authenticating entity (1) for generating a random number;
a non-volatile memory (6) provided in the authenticating entity (1) and
appliances for communication with terminals (8) of the digital mobile communication system via a common radio interface.

10. Device according to claim 9, **characterised in that** the authenticating entity (1) is a component of a permanent station of a digital cordless telephone system.

11. Device according to one of claims 9 or 10, **characterised in that** the digital mobile communication system is a GSM mobile communication network.

12. Device according to one of claims 9 to 11, **characterised in that** the subscriber-specific component (4) is a SIM card.
